# EUROPÄISCHE PATENTANMELDUNG

(11) **EP 1 870 652 A1**
(43) Veröffentlichungstag der Anmeldung: **26.12.2007**
(21) Anmeldenummer: 07110462.4
(22) Anmeldetag: 18.06.2007
(51) Int. Cl.: F27B 3/00, F27B 9/00, F27D 17/00

(54) **Bolzenerwärmungsofen**

(30) Priorität: 20.06.2006 DE 102006028712
(71) Anmelder: Otto Junker GmbH, 52152 Simmerath (DE)
(72) Erfinder: Sommereisen, Winfried, 52064 Aachen (DE)
(74) Vertreter: Cohausz & Florack

(57) **Zusammenfassung**

Die Erfindung betrifft einen Bolzenerwärmungsofen mit mindestens einem Flachflammenbrenner 1, welcher erfindungsgemäß im Hinblick auf einen verbesserten Wirkungsgrad dadurch ausgestaltet ist, dass dem Flachflammenbrenner 1 ein die Verbrennungsluft vorwärmender Regenerator 2 zugeordnet ist.

## Beschreibung

Die Erfindung betrifft einen Bolzenerwärmungsofen mit mindestens einem Flachflammenbrenner sowie eine Bolzenerwärmungsanlage und ein Verfahren zur Bolzenerwärmung.

Bolzenerwärmungsöfen, die mit Flachflammenbrennern oder Vollgemischbrennern beheizt werden, sind in einer Vielzahl von Ausgestaltungen aus dem Stand der Technik bekannt. Mit konventionellen Flachflammenbrennern und Vollgemischbrennern werden Ofenwirkungsgrade von 35 bis 40 % erreicht. Bei einer bekannten teilweisen Nutzung der im Abgas der Brenner enthaltenen Wärme zur Vorwärmung der Verbrennungsluft können die Ofenwirkungsgrade auf 40 bis 45 % gesteigert werden. Eine weitere Möglichkeit zur Steigerung des Wirkungsgrades besteht darin, dass die in den Abgasen enthaltene Restwärme in rekuperativ arbeitenden Vorwärmzonen für die Bolzen, die den Bolzenerwärmungsöfen vorgeschaltet sind, durch Beaufschlagung im Gegenstromverfahren oder unter Zuhilfenahme von Heißgasventilatoren zur Erzeugung von Hochkonvektion, benutzt wird. Unter Ausnutzung der beschriebenen Möglichkeiten werden heute Gesamtanlagen-Wirkungsgrade von 65 bis 70 % erreicht.

Insbesondere der bei der Erwärmung von Bolzen vorteilhafte Einsatz von Flachflammenbrennern lässt heutzutage keine höheren Wirkungsgrade zu. Bei diesen sogenannten Flachflammenbrennern, bei denen sich eine radial ausbreitende, an der kelchartigen Erweiterung des Brennersteins und an der umgebenden Ofenwand anliegende Flammenscheibe bildet, ist die Ausbildung des Brenners als selbstrekuperierender Brenner, welcher erheblich höhere Wirkungsgrade aufweisen würde, bislang technisch nicht möglich. Auf der anderen Seite sind derartige Flachflammenbrenner bei der Bolzenerwärmung besonders vorteilhaft, da die Wärme auf das Wärmegut durch Festkörperstrahlung und durch Strahlung des Gasvolumens übertragen wird. Ein direkter Flammenkontakt mit der Bolzenoberfläche und ein damit unter Umständen verbundenes Überhitzen der Bolzenoberfläche bis hin zum Aufschmelzen wird bei der Verwendung von Flachflammenbrennern vorteilhafterweise vermieden.

Ausgehend von dem zuvor beschriebenen Stand der Technik liegt also der Erfindung die Aufgabe zugrunde, einen Bolzenerwärmungsofen, eine Bolzenerwärmungsanlage sowie ein Verfahren zur Bolzenerwärmung anzugeben, welches eine optimale Bolzenerwärmung bei sehr hohen Wirkungsgraden ermöglicht.

Gemäß einer ersten Lehre der Erfindung wird die zuvor hergeleitete und aufgezeigte Aufgabe dadurch gelöst, dass bei einem Bolzenerwärmungsofen dem Flachflammenbrenner ein die Verbrennungsluft vorwärmender Regenerator zugeordnet ist. Diese aus dem Stand der Technik unbekannte Zuordnung eines Regenerators zu einem in einem Bolzenerwärmungsofen angeordneten Flachflammenbrenner ermöglicht die Verbesserung der Wirkungsgrade der Bolzenerwärmung auf über 85 %.

Dadurch, dass gemäß einer ersten Ausgestaltung der ersten Lehre der Erfindung der Regenerator bei abgeschaltetem Flachflammenbrenner mit dem Brennerauslass zumindest eines zugeordneten Flachflammenbrenners strömungsverbunden ist, ist eine einfache Zuführung der heißen Brennerabgase zum Regenerator gewährleistet.

Sind mindestens zwei Flachflammenbrenner einem Regenerator zugeordnet, so reduziert sich hierdurch der anlagentechnische Aufwand und die mit diesem verbundenen Kosten.

Dadurch, dass die Flachflammenbrenner in der Ofenwand beidseitig von den in Längsrichtung durch den Ofen transportierten Bolzen angeordnet sind und dass mindestens ein auf einer Seite angeordneter Flachflammenbrenner einem auf derselben Seite angeordneten Regenerator zugeordnet ist, ist einerseits der anlagentechnische Aufwand reduziert, da die auf der gegenüberliegenden Seite angeordneten Flachflammenbrenner nicht über lange Abgasleitungen mit dem Regenerator verbunden werden müssen und darüber hinaus die auf der einen Seiten der Bolzen angeordneten Flachflammenbrenner weiter betrieben werden können, während die auf der anderen Seite des Bolzens angeordneten Flachflammenbrenner abgeschaltet sind. Hierbei werden die heißen Abgase der eingeschalteten Flachflammenbrenner an der Bolzenoberfläche vorbei durch die abgeschalteten Flachflammenbrenner in den, den abgeschalteten Flachflammenbrennern zugeordneten Regenerator geleitet. Hierdurch wird die Wärmeübertragung auf den Bolzen weiter optimiert.

Gemäß einer zweiten Lehre der Erfindung wird die oben hergeleitete und aufgezeigte Aufgabe für eine Bolzenerwärmungsanlage dadurch gelöst, dass diese einen Bolzenerwärmungsofen gemäß der ersten Lehre der Erfindung aufweist. Dadurch, dass in einer Bolzenerwärmungsanlage, die beispielsweise auch eine Bolzenschere umfassen kann, ein Bolzenerwärmungsofen gemäß der ersten Lehre der Erfindung eingesetzt wird, werden zunächst die in Verbindung mit der ersten Lehre der Erfindung beschriebenen Vorteile erreicht. Darüber hinaus können bei einer gemäß der zweiten Lehre der Erfindung ausgestalteten Bolzenerwärmungsanlage die rekuperativ arbeitenden Vorwärmzonen entfallen, wodurch sich die Anlagenlänge auf das Notwendigste reduziert und somit die Bolzenerwärmungsanlage wesentlich schneller auf Durchmesser- oder Legierungswechsel reagieren kann.

Gemäß einer dritten Lehre der Erfindung wird die oben hergeleitete und aufgezeigt Aufgabe für ein Verfahren zur Bolzenerwärmung, bei welchem die Bolzen mit Hilfe mindestens eines Flachflammenbrenners erwärmt werden, dadurch gelöst, dass die Verbrennungsluft des Flachflammenbrenners beim Durchströmen eines Regenerators vorgewärmt wird. Durch diese Vorwärmung der Verbrennungsluft wird der oben bereits beschriebene, besonders vorteilhafte erhöhte Wirkungsgrad erreicht. Für die mit dem Verfahren gemäß der dritten Lehre der Erfindung verbundenen Vorteile wird auf die in Verbindung mit der ersten Lehre der Erfindung erläuterten Vorteile verwiesen.

Wird das Abgas bei abgeschaltetem Flachflammenbrenner über den Brennerauslass und den Regenerator in die Abgasleitung geführt, so wird hierdurch der apparative Aufwand minimiert und die Restwärmenutzung maximiert.

Dadurch, dass mindestens zwei Flachflammenbrenner im Wechsel eingeschaltet und ausgeschaltet werden, wird der Regeneratoreinsatz ohne die zusätzliche Verwendung von Brennern anderen Typs, z. B. Vollgemischbrennern, ermöglicht.

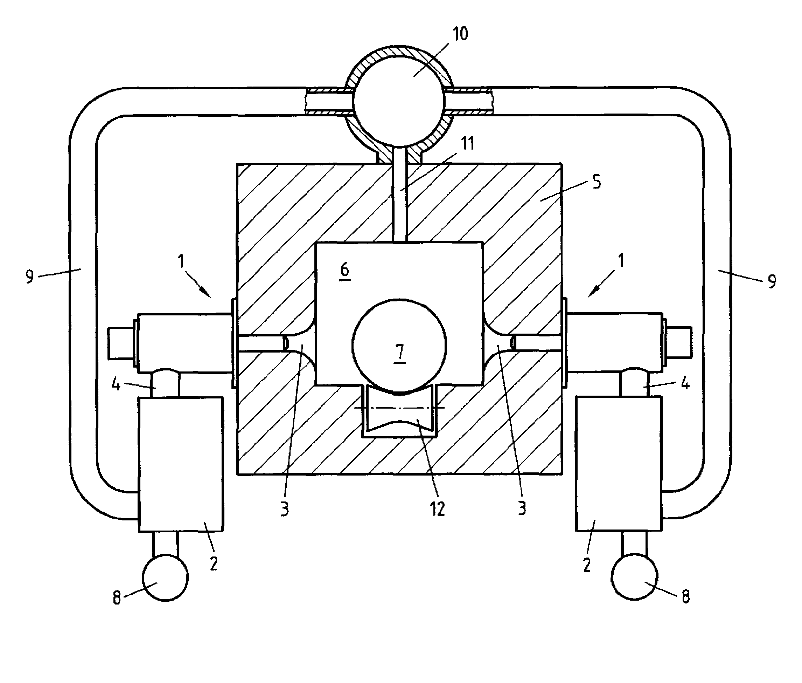

Im Einzelnen gibt es nun eine Vielzahl von Möglichkeiten, die erfindungsgemäßen Lehren auszugestalten und weiterzubilden. Hierzu wird einerseits verwiesen auf die den unabhängigen Patentansprüchen nachgeordneten Patentansprüche und andererseits auf die nachfolgende Beschreibung eines Ausführungsbeispiels in Verbindung mit der Zeichnung.

In der Zeichnung zeigt die einzige Figur
ein Ausführungsbeispiel eines erfindungsgemäßen Bolzenerwärmungsofens im Schnitt.

Das dargestellte Ausführungsbeispiel eines erfindungsgemäßen Bolzenerwärmungsofens weist zunächst, wie aus dem Stand der Technik bekannt, mehrere Flachflammenbrenner 1 auf. Erfindungsgemäß ist den dargestellten Flachflammenbrennern 1 jeweils ein die Verbrennungsluft vorwärmender Regenerator 2 zugeordnet. Hierdurch wird die Nutzung der im Abgas der Flachflammenbrenner 1 enthaltenen Restwärme zur Vorwärmung durch der den Regenerator 2 geleiteten Verbrennungsluft gewährleistet.

Bei dem dargestellten Ausführungsbeispiel sind die Regeneratoren 2 bei abgeschalteten Flachflammenbrennern 1 mit dem Brennerauslass 3 der zugeordneten Flachflammenbrenner 1 über eine Verbindungsleitung 4 strömungsverbunden, so dass die Anordnung eines separaten Kanals in der Ofenwand 5 zum Zwecke der Strömungsverbindung des Ofeninnenraums 6 mit den Regeneratoren 2 entfällt.

Bei dem dargestellten Ausführungsbeispiel eines erfindungsgemäßen Bolzenerwärmungsofens sind, in der einzigen Figur - die vor bzw. hinter dem dargestellten Schnitt liegend - nicht dargestellt, mehrere Flachflammenbrenner 1 nebeneinander, beispielsweise vier Stück pro laufendem Meter Ofen, jeweils rechts und links in der Ofenwand 5 angeordnet. Um den anlagentechnischen Aufwand zu reduzieren, sind dabei mehrere, z. B. vier, nebeneinander liegende Flachflammenbrenner 1 einem gemeinsamen Regenerator 2 zugeordnet. Die entsprechenden Verbindungsleitungen sind in der einzigen Figur nicht dargestellt.

Dadurch, dass, wie in der einzigen Figur dargestellt, die Flachflammenbrenner 1 in der Ofenwand 5 beidseitig von den in Längsrichtung durch den Ofen transportierten Bolzen 7 angeordnet sind und dass mindestens ein auf einer Seite angeordneter Flachflammenbrenner 1 einem Regenerator 2 zugeordnet ist, wird gewährleistet, dass die links und rechts der Bolzen 7 angeordneten Flachflammenbrenner 1 im Wechsel betrieben werden können. Das heißt, dass beispielsweise die auf der linken Seite angeordneten Flachflammenbrenner 1 eingeschaltet sind, wobei die Verbrennungsluft über eine Verbrennungsluftzufuhr 8 den linken Regenerator 2 und die Verbindungsleitung 4 vorgewärmt zum linken Flachflammenbrenner 1 gelangt, während das vom linken Flachflammenbrenner 1 ausgestoßene heiße Abgas durch den Ofeninnenraum 6 über die Oberfläche der Bolzen 7 und den in der Ofenwand 5 angeordneten Brennerauslass 3 des rechten Flachflammenbrenners 1, die Verbindungsleitung 4 zum rechten Regenerator 2 in die Abgasleitung 9 in den zentralen Abgaskanal 10 strömen kann. Bei diesem Strömungsfluss wird neben der erfindungsgemäßen Restwärmespeicherung in den Regeneratoren 2 auch eine maximale konvektive Unterstützung der Wärmeübertragung auf die Bolzen 7 gewährleistet.

Vorzugsweise werden die Wechselintervalle zwischen dem Heizen und dem Regenerieren so kurz gewählt, dass der Bolzen 4 praktisch immer beidseitig erwärmt wird. Vorzugsweise sind die Zeitintervalle, bei dem die einem Regenerator 2 auf einer Seite zugeordneten Flachflammenbrenner 1 heizen und die auf der gegenüberliegenden Seite angeordneten, einem Regenerator 2 zugeordneten Flachflammenbrenner 1 das Abgas aufnehmen und den Regenerator 2 aufheizen, größer als 10 Sekunden und kleiner als 30 Sekunden. Durch eine derartige Wahl der Zeitintervalle wird eine hohe Temperaturgleichmäßigkeit im Ofeninnenraum 6 gewährleistet, wobei die Mantelfläche der Bolzen 7 immer mit strömendem Abgas in Verbindung kommt.

Bei dem dargestellten Ausführungsbeispiel wird die Massendifferenz aus Verbrennungsluft und Abgas, die etwa 10 % beträgt, als Restabgas über eine Restabgasleitung 11 in den Abgaskanal 10 abgeleitet. Hierdurch wird insbesondere eine thermische Überbeanspruchung der Flachflammenbrenner 1 und der Regeneratoren 2 vermieden.

Vorzugsweise ist hierbei eine Restabgasleitung 10 einer, bei dem dargestellten Ausführungsbeispiel von vier auf jeder Seite angeordneten Flachflammenbrennern 1 und den zugeordneten zwei Regeneratoren 2 gebildeten Zone zugeordnet. Durch diese Maßnahme werden mehrere in Längsrichtung des Bolzenerwärmungsofens hintereinander angeordnete Zonen hinsichtlich der Abgasströmung weitgehend voneinander entkoppelt.

Bei dem dargestellten Ausführungsbeispiel erfolgt der Transport der Bolzen 7 durch ein im Boden des Bolzenerwärmungsofens angeordnetes, nicht näher dargestelltes Transportsystem 12, bei dem es sich beispielsweise um ein Kettentransportsystem, ein Rollentransportsystem, ein Hubbalkentransportsystem oder ein Gleitstangentransportsystem handeln kann.

## Patentansprüche

1. Bolzenerwärmungsofen mit mindestens einem Flachflammenbrenner (1), **dadurch gekennzeichnet, dass** dem Flachflammenbrenner (1) ein die Verbrennungsluft vorwärmender Regenerator (2) zugeordnet ist.

2. Bolzenerwärmungsofen nach Anspruch 1, **dadurch gekennzeichnet, dass** der Regenerator (2) bei abgeschaltetem Flachflammenbrenner (1) mit dem Brennerauslass (3) zumindest eines zugeordneten Flachflammenbrenners (1) strömungsverbunden ist.

3. Bolzenerwärmungsofen nach Anspruch 1 oder 2,
**dadurch gekennzeichnet, dass** mindestens zwei Flachflammenbrenner (1) einem Regenerator (2) zugeordnet sind.

4. Bolzenerwärmungsofen nach einem der Ansprüche 1 bis 3,
**dadurch gekennzeichnet, dass** die Flachflammenbrenner (1) in der Ofenwand (5) beidseitig von den in Längsrichtung durch den Ofen transportierten Bolzen (7) angeordnet sind und dass mindestens ein auf einer Seite angeordneter Flachflammenbrenner (1) einem auf derselben Seite angeordneten Regenerator (2) zugeordnet ist.

5. Bolzenerwärmungsanlage mit einem Bolzenerwärmungsofen nach einem der Ansprüche 1 bis 4.

6. Verfahren zur Bolzenerwärmung, bei welchem die Bolzen mit Hilfe mindestens eines Flachflammenbrenners erwärmt werden, **dadurch gekennzeichnet, dass** die Verbrennungsluft des Flachflammenbrenners beim Durchströmen eines Regenerators vorgewärmt wird.

7. Verfahren nach Anspruch 6, **dadurch gekennzeichnet, dass** das Abgas bei abgeschaltetem Flachflammenbrenner über den Brennerauslass und den Regenerator in eine Abgasleitung geführt wird.

8. Verfahren nach Anspruch 6 oder 7, **dadurch gekennzeichnet, dass** mindestens zwei Flachflammenbrenner im Wechsel eingeschaltet und ausgeschaltet werden.
